# EUROPÄISCHE PATENTANMELDUNG

(11) **EP 4 002 390 A1**
(43) Veröffentlichungstag der Anmeldung: **25.05.2022**
(21) Anmeldenummer: 20208937.1
(22) Anmeldetag: 20.11.2020
(51) Int. Cl.: G21C 17/108, G21C 23/00, G01T 3/00, G21G 1/02, G21C 19/20

(54) **ABSPERREINRICHTUNG ZUM STOPPEN VON BESTRAHLTEN ODER ZU BESTRAHLENDEN FESTKÖRPERN**

(71) Anmelder: EQE GmbH, 5040 Schöftland (CH)
(72) Erfinder: Maibach, Thomas, 5040 Schöftland (CH); Bachmann, Pascal, 5040 Schöftland (CH); Menges, Alexander, 5040 Schöftland (CH); Ziegler, Sebastian, 5040 Schöftland (CH); Böhler, Felix, 5040 Schöftland (CH)
(74) Vertreter: Rutz, Andrea

(57) **Zusammenfassung**

Es wird eine Absperreinrichtung (5) angegeben zum Stoppen von bestrahlten oder zu bestrahlenden Festkörpern in einem Leitungssystem (2), das zum Transportieren der Festkörper mittels eines Treibfluids in einen Kernreaktor (1) hinein und aus diesem hinaus dient. Die Absperreinrichtung weist zumindest einen Grundkörper (52) mit einem durchgehenden Kanal (521) für die Festkörper sowie ein innerhalb des Grundkörpers (52) angeordnetes Stellelement (58) auf, welches relativ zum Grundkörper (52) derart zwischen einer Öffnungsstellung und einer Schliessstellung verstellbar ist, dass der Kanal (521) für die Festkörper in der Öffnungsstellung durchgängig und in der Schliessstellung verschlossen ist. Das Stellelement (58) ist mittels Verschieben relativ zum zumindest einen Grundkörper (52) von der Öffnungsstellung in die Schliessstellung sowie von der Schliessstellung in die Öffnungsstellung bringbar. Die Absperreinrichtung kann insbesondere als Teil eines Kugelmesssystems (3) oder eines Nuklidaktivierungssystems (4) verwendet werden.

## Beschreibung

### TECHNISCHES GEBIET

Die vorliegende Erfindung betrifft eine Absperreinrichtung zum Stoppen von bestrahlten oder zu bestrahlenden Festkörpern in einem Leitungssystem, das zum Transportieren der Festkörper mittels eines Treibfluids, insbesondere eines Treibgases, in einen Kernreaktor hinein und aus diesem hinaus dient. Die Absperreinrichtung ist insbesondere zum Stoppen von Kugeln eines Kugelmesssystems verwendbar, das zur Messung der Neutronenflussverteilung in einem Kernreaktor dient. Alternativ ist die Absperreinrichtung zum Stoppen von Targets eines Nuklidaktivierungssystems verwendbar, welches zur Bestrahlung der Targets in einem Kernreaktor dient.

### STAND DER TECHNIK

Um die Neutronenflussverteilung in einen Kernreaktor von zum Beispiel in einem Kernkraftwerk zu messen, sind Kugelmesssysteme bekannt, die oft auch als Kugelschussmesssysteme bezeichnet werden. Die mittels eines Kugelmesssystems bestimmte Flussverteilung wird unter anderem genutzt, um die kontinuierlich messenden (aber mit weniger Messpunkten ausgestatteten) Neutronenmesssysteme regelmässig neu zu kalibrieren bzw. deren Signale zu validieren.

Ein Kugelmesssystem umfasst üblicherweise mehrere Rohre, die in vertikaler Richtung an mehreren Stellen parallel zu den Brennstäben in den Reaktorkern hineinragen. Zur Messung werden vanadiumhaltige Stahlkugeln via ein Leitungssystem und mit Hilfe eines Treibgases in die Rohre transportiert, wo sie entlang der Brennstäbe aufgereiht einige Minuten verbleiben und von den Neutronen aktiviert werden. Mit Hilfe des Treibgases werden die Kugeln dann via das Leitungssystem zu einem Messtisch ausserhalb des Reaktors transportiert. Dort wird die Aktivität der Stahlkugeln mit Strahlungsdetektoren gemessen. Da die Kugeln sowohl in den Rohren im Reaktorkern wie auch im Leitungssystem und auf dem Messtisch stets hintereinander angeordnet sind, können die einzelnen Kugeln jeweils einer Position im Reaktorkern zugeordnet und von der Strahlungsaktivität der Kugeln auf den Neutronenfluss an den jeweiligen Stellen im Reaktorkern geschlossen werden. Zur Verteilung der Kugeln auf die jeweiligen Rohre im Reaktorkern, auch Instrumentationsfinger genannt, weist das Leitungssystem meist eine Vielzahl von Stellventilen auf. Analog dazu können Stellventile verwendet werden, um die Kugeln auf verschiedene Positionen des Messtischs zu verteilen.

Beim Transport durch das Leitungssystem erhalten die Kugeln jeweils eine hohe kinetische Energie und müssen gestoppt werden, bevor sie Beispiel in die Messposition gelangen, oder wenn keine Messung durchgeführt wird und die Kugeln in eine Parkposition gebracht werden. Ausserdem werden Notschliessblöcke eingesetzt, um zum Beispiel bei Auftreten eines Lecks in einem Instrumentationsfinger einen reaktornahen Leitungssystemabschnitt von einem reaktorfernen Leitungssystemabschnitt zu trennen. Zum Stoppen der Kugeln bzw. Verschliessen der Leitungen werden im Stand der Technik Rotationsventile und Kugelhahnventile verwendet.

Das vorhandene Kugelmesssystem kann ausserdem zur Bestrahlung von Nukliden benutzt werden. Die dadurch entstandenen Radionuklide werden in der Medizin, aber auch in anderen Gebieten der Technik, benutzt. Beispielsweise ist es bekannt, Radionuklide in der Nuklearmedizin zur Bestrahlung von Prostatakrebs einzusetzen. Zur Erzeugung der Radionuklide können sog. Nuklidaktivierungstargets in die Instrumentationsfinger eines Kugelmesssystems eingebracht werden, wenn keine Messung durchgeführt wird. Die Targets, welche kugel-, oval- oder zylinderförmig sein können oder sonst eine Form haben können, werden hierzu analog wie die Messkugeln mittels eines Treibgases durch das Leitungssystem des Kugelmesssystems in die im Reaktorkern angeordneten Instrumentationsfinger eingeschossen. Die Messkugeln befinden sich dabei in einer Parkposition. Wenn eine Messung notwendig wird, müssen die Targets aus den Rohren im Reaktorkern entfernt und ihrerseits via das Leitungssystem in eine Parkposition transportiert werden.

Genauso wie die Messkugeln erhalten auch die Targets beim Transport durch das Leitungssystem jeweils eine hohe kinetische Energie und müssen jeweils beim oder vor dem Erreichen der Parkposition oder bei Auftreten eines Notfalls gestoppt werden können. Auch muss es möglich sein, die Targets nach ausreichender Bestrahlungsdauer dem System zu entnehmen und durch neue zu bestrahlende Targets zu ersetzen. Auch hierbei sind Stoppvorgänge notwendig, um die Targets vor der Überführung in einen Entnahmebehälter abzubremsen. Genauso wie für das Stoppen der Messkugeln werden auch für das Stoppen der Targets im Stand der Technik Rotationsventile und Kugelhahnventile verwendet.

Aus der DE 10 2017 125 606 A1 sind rotationsstarr miteinander verbundene Kugelhahnventile zum Stoppen und Verteilen von Messkugeln und Targets bekannt. Die Kugelhahnventile sind mit Hilfe einer einzigen Antriebswelle gemeinsam verstellbar.

In Kernkraftwerken ist der Platz insbesondere im abgeschirmten inneren Bereich stark begrenzt. Die bei Rotations- und Kugelhahnventilen notwendige Anordnung der drehbaren Ventilkörper sowie des Antriebs übereinander entlang der sich senkrecht zu den Leitungen erstreckenden Rotationsachse, ist deshalb unvorteilhaft, was den Platzbedarf anbelangt. Gerade dem für den Betrieb des Kernkraftwerks nicht notwendigen Nuklidaktivierungssystem wird meist wenig Platz zugestanden bzw. das Nuklidaktivierungssystem wird nachgerüstet und muss innerhalb des verfügbaren limitierten Platzes untergebracht werden. Es besteht daher ein Bedarf, die Komponenten von Kugelschusssystemen und insbesondere die Komponenten von Nuklidaktivierungssystemen so platzsparend wie möglich auszugestalten und anzuordnen. Ausserdem ist die Herstellung von Rotations- und Kugelhahnventilen aufgrund der vielen gerundeten Flächen verhältnismässig aufwändig. Je nachdem, ob es sich um eine Notschliesseinrichtung handelt, die auch den Durchgang des Treibgases unterbinden können soll, oder ob es sich um eine Absperreinrichtung handelt, die zwar die Kugeln stoppen, für das Treibgas jedoch immer durchgängig sein soll, stellen sich unterschiedliche Anforderungen an die Abdichtung bzw. Durchlässigkeit in der Schliessstellung. Bei Rotations- und Kugelhahnventilen sind diese Anforderungen oft schwierig bzw. mit erheblichem Aufwand erreichbar.

### DARSTELLUNG DER ERFINDUNG

Es ist also eine Aufgabe der vorliegenden Erfindung, eine Absperreinrichtung zum Stoppen von bestrahlten oder zu bestrahlenden Festkörpern in einem Leitungssystem anzugeben, welche einfach herstellbar und platzsparend ist. Zur Lösung dieser Aufgabe wird eine Absperreinrichtung vorgeschlagen, wie sie in Anspruch angegeben ist. Ausserdem werden in den Ansprüchen 12 und 13 zwei verschiedene Verwendungen für eine solche Absperreinrichtung angegeben. Vorteilhafte Ausführungsformen sind in den abhängigen Ansprüchen angegeben.

Die vorliegende Erfindung stellt also eine Absperreinrichtung zur Verfügung zum Stoppen von bestrahlten oder zu bestrahlenden Festkörpern in einem Leitungssystem, das zum Transportieren der Festkörper mittels eines Treibfluids, insbesondere eines Treibgases, in einen Kernreaktor hinein und aus diesem hinaus dient und insbesondere ein Teil eines Kugelmesssystems bilden kann. Die Absperreinrichtung weist auf
zumindest einen Grundkörper mit einem durchgehenden Kanal für die Festkörper, sowie
ein innerhalb des Grundkörpers angeordnetes Stellelement, welches relativ zum Grundkörper derart zwischen einer Öffnungsstellung und einer Schliessstellung verstellbar ist, dass der Kanal für die Festkörper in der Öffnungsstellung durchgängig und in der Schliessstellung verschlossen ist.

Das Stellelement ist mittels Verschieben, das heisst mittels einer translatorischen Bewegung, relativ zum zumindest einen Grundkörper von der Öffnungsstellung in die Schliessstellung sowie von der Schliessstellung in die Öffnungsstellung bringbar.

Indem das Stellelement zum Öffnen und Verschliessen der Absperreinrichtung verschoben und nicht wie im Stand der Technik gedreht wird, ergeben sich vielfältige Möglichkeiten, um die Absperreinrichtung nicht nur einfacher herzustellen, sondern auch besonders platzsparend auszubilden und anzuordnen. Insbesondere sind gerundete Flächen sind nicht mehr zwingend.

Durch das Verschieben des Stellelements relativ zum zumindest einen Grundkörper wird der in jedem Grundkörper vorhandene durchgehende Kanal somit jeweils verschlossen, das heisst für die Festkörper abgesperrt, oder geöffnet. In einer insbesondere bevorzugten Ausführungsform erstreckt sich das Stellelement derart in den bzw. die Grundkörper hinein, dass es in seiner Schliessstellung den bzw. die Kanäle unterbricht bzw. in der Öffnungsstellung freigibt. Das heisst, der bzw. die Kanäle erstrecken sich jeweils beidseitig zum Stellelement und je nach Stellung bildet das Stellelement einen Absperrriegel oder stellt eine Verbindung zwischen den beiden beidseitig vorhandenen Kanalteilen her. Das Stellelement weist hierzu bevorzugt entsprechende Verbindungskanäle auf. Mit einem Kanal ist im Rahmen dieses Dokuments eine vollständig von Material umschlossene Leitung gemeint, das heisst der Kanal bildet eine vollständig umschlossene Öffnung zum Durchlassen der Festkörper.

Die bestrahlten bzw. zu bestrahlenden Festkörpern können insbesondere als Teil eines Kugelmesssystems zur Messung der Neutronenflussverteilung im Kernreaktor dienen. In diesem Fall sind die Festkörper bevorzugt aus vanadiumhaltigem Stahl hergestellt. Das Leitungssystem bildet dann zusammen mit den Kugeln einen Teil eines Kugelmesssystems (auch als Kugelschussmesssystem bekannt).

Bei den bestrahlten bzw. zu bestrahlenden Festkörpern kann es sich aber auch um Nuklidaktivierungstargets handeln, welche zum Beispiel für medizinische Zwecke im Reaktorkern bestrahlt werden. Das Leitungssystem bildet dann einen Teil eines Nuklidaktivierungssystems, das bevorzugt in Kombination mit einem Kugelmesssystem vorliegt und verwendet wird. Das Nuklidaktivierungssystem kann insbesondere nachträglich in Ergänzung zu einem Kugelmesssystem nachgerüstet sein.

Bei den Festkörpern handelt es sich bevorzugt um Kugeln. Sie können grundsätzlich aber auch beliebige andere Formen haben, wobei insbesondere eine zylindrische, pelletartige Form geeignet ist.

Die Festkörper weisen üblicherweise einen Aussendurchmesser von einem Millimeter bis zwei Millimeter auf. Die Leitungen des Leitungssystems weisen dementsprechend einen Innendurchmesser von ebenfalls einem Millimeter bis 2 Millimeter auf. Der Innendurchmesser der Leitungen sowie des durchgehenden Kanals des zumindest einen Grundkörpers kann geringfügig grösser als der Aussendurchmesser der Festkörper sein, aber nicht mehr als der anderthalbfache Aussendurchmesser der Festkörper.

Das Treibfluid kann eine Flüssigkeit oder, was bevorzugt ist, ein Gas sein. Beim Treibgas handelt es sich bevorzugt um Stickstoff (N₂). Das Treibfluid wird in das Leitungssystem eingeleitet, um die Festkörper mittels Über- und Unterdruck durch das Leitungssystem zu befördern. Beim Leitungssystem handelt es sich insbesondere um ein molchbares Leitungssystem.

In einer insbesondere bevorzugten Ausführungsform weist die Absperreinrichtung mehrere derartige Grundkörper mit jeweils einem durchgehenden Kanal auf. Vorteilhaft sind dabei die Kanäle von allen Grundkörpern in der Öffnungsstellung des Stellelements für die Festkörper durchgängig und in der Schliessstellung verschlossen. Die Absperreinrichtung dient dann also bevorzugt zum Absperren von mehreren Leitungen. Durch das Verschieben des Stellelements, welches wie erwähnt bevorzugt einen Absperrriegel bildet, können auf sehr einfache Art und Weise auch mehrere, in jeweils einem Grundkörper vorgesehene Kanäle für die Festkörper verschlossen bzw. geöffnet werden. Die Grundkörper sind dabei bevorzugt hintereinander angeordnet und das Stellelement erstreckt sich durch alle Grundkörper hindurch. Der zusätzliche Platzbedarf für weitere Kanäle, die durch die Absperreinrichtung abzusperren sind, ist dadurch minimal.

Falls mehrere Grundkörper vorhanden sind, erstrecken sich deren Kanäle vorteilhaft parallel zueinander. Sofern die Grundkörper zudem alle hintereinander angeordnet sind, sind die Kanäle dann in einer gemeinsamen Ebene angeordnet. Eine solche Anordnung ist nicht nur besonders platzsparend, sondern die Kanäle können auch sehr einfach mittels Verschieben eines einzigen Stellelements für die Festkörper verschlossen und geöffnet, insbesondere jeweils gleichzeitig verschlossen und geöffnet werden. Die Absperreinrichtung weist somit bevorzugt mehrere Grundkörper, aber nur ein einziges Stellelement auf, welches zum Verschliessen und Öffnen der Kanäle von allen Grundkörpern dient.

Vorteilhaft sind die mehreren Grundkörper hintereinander angeordnet zwischen zwei Spannelementen eingespannt. Als Spannelemente können zum Beispiel Endblöcke oder Deckel dienen, die von gegenüberliegenden Seiten her an eine dazwischen angeordnete Reihe von Grundkörpern anliegen und mittels einem oder mehreren Verbindungselementen wie insbesondere Verbindungsschrauben miteinander verbunden sind. Mittels der Verbindungselemente werden die Spannelemente bevorzugt zueinander hingezogen und verspannen dadurch die dazwischen angeordneten Grundkörper gegeneinander. Die Spannelemente dienen somit zum Zusammenhalten der Grundkörper und vorteilhaft der Absperreinrichtung insgesamt. Das oder die Verbindungselemente erstrecken sich bevorzugt durch die Grundkörper hindurch.

Der oder die Grundkörper haben bevorzugt jeweils eine quaderförmige äussere Gestalt. Falls mehrere Grundkörper vorhanden sind, sind diese bevorzugt identisch ausgestaltet. Die Herstellung vereinfacht sich dadurch. Die Absperreinrichtung kann insbesondere derart ausgestaltet sein, dass die Anzahl der Grundkörper je nach Bedarf anpassbar ist. Vorteilhaft ist die Absperreinrichtung hierzu zerstörungsfrei auseinandernehmbar, so dass weitere Grundkörper hinzugefügt oder bereits vorhandene entfernt werden können bevor die Absperreinrichtung anschliessend wieder zusammengebaut wird. Die Absperreinrichtung weist bevorzugt also einen modularen Aufbau auf.

Der zumindest eine Grundkörper weist bevorzugt eine sich mit dem Kanal schneidende, insbesondere rechtwinklig schneidende, Durchgangsöffnung auf, durch welche sich das Stellelement verschiebbar hindurch erstreckt. Falls mehrere Grundkörper vorhanden sind, weisen bevorzugt alle Grundkörper eine derartige, sich mit dem Kanal schneidende Durchgangsöffnung auf. Vorteilhaft erstreckt sich das Stellelement dann durch die Durchgangsöffnungen von allen Grundkörpern hindurch, so dass alle Kanäle mittels Verschieben des Stellelements für die Festkörper verschlossen bzw. geöffnet werden können.

Bevorzugt sind der oder die Kanäle in der Schliessstellung des Stellelements für das Treibfluid durchgängig, also nur für die Festkörper versperrt, nicht jedoch für das Treibfluid. Hierzu weist der zumindest eine Grundkörper und/oder das Stellelement bevorzugt eine Nut, insbesondere eine Ringnut, auf, um auch in der Schliessstellung einen Durchlass für das Treibfluid zu ermöglichen. Wenn sich das Stellelement durch den zumindest einen Grundkörper hindurcherstreckt und sich in der Schliessstellung beidseits zum Stellelement jeweils ein Kanalteil befindet, erstreckt sich die Nut bevorzugt also vom ersten Kanalteil zum zweiten Kanalteil. Auf diese Weise ist der Kanal in der Schliessstellung zwar für die Festkörper durch das Stellelement verschlossen, aufgrund der Nut jedoch für das Treibfluid weiterhin durchlässig. Selbstverständlich kann die Absperreinheit in anderen Ausführungsformen auch derart ausgebildet sein, dass die Kanäle der Grundkörper in der Schliessstellung des Stellelements sowohl für die Festkörper als auch für das Treibfluid verschlossen sind.

In gewissen, ebenfalls bevorzugten Ausführungsformen kann der zumindest eine Grundkörper und/oder das Stellelement eine Abbremseinrichtung zum Abbremsen der Festkörper aufweisen. Beispielsweise kann das Stellelement parallel zu dem bzw. den durchgehenden Verbindungskanälen jeweils eine weitere durchgehende oder nicht durchgehende Öffnung oder Aussparung aufweisen, welche sich parallel zum Verbindungskanal in den Grundkörper hinein erstreckt, und in welche eine Spiral- oder andere Feder eingesetzt ist, um die Festkörper in der Schliessstellung des Stelleelements abzubremsen. Alternativ oder zusätzlich zur Feder kann auch ein Dämpfungselement vorhanden sein, um die Abbremsung der Festkörper zu dämpfen. Die Abbremseinrichtung kann auch dadurch ausgebildet sein, dass die oben erwähnten Nuten, insbesondere Ringnuten, welche am Stellelement ausgebildet sind, um einen Durchlass für das Treibfluid in der Schliessstellung zu bilden, entfallen oder nur klein dimensioniert sind. Bei der Annäherung eines Festkörpers an das sich in der Schliessstellung befindliche Stellelement bildet das Treibfluid dann ein Polster, welches den Festkörper abbremst. Um die Festkörper mit Hilfe des Treibfluids wieder von der Absperreinrichtung weg zu transportieren, könnte das Stellelement wieder in die Öffnungsstellung verschoben werden, so dass das Treibfluid ungehindert durch das Stellelement hindurch gelangen kann. Durch das Abbremsen verringert sich der Aufprallimpuls des Festkörpers auf das Stellelement, wodurch das Stellelement und die Festkörper weniger stark abgenutzt werden.

Vorteilhaft ist eine Abdichtung vorgesehen, um den zumindest einen Grundkörper derart gegenüber dem Stellelement abzudichten, dass weder in der Öffnungsstellung noch in der Schliessstellung Gas zwischen dem Grundkörper und dem Stellelement hindurch aus dem Kanal nach aussen entweichen kann. Mit "aussen" ist hier die Umgebung ausserhalb der Absperreinrichtung gemeint.

Falls die Absperreinrichtung mehrere Grundkörper aufweist, ist zwischen benachbarten Grundkörpern bevorzugt jeweils ein Dichtelement angeordnet, um zu verhindern, dass weder in der Öffnungsstellung noch in der Schliessstellung Gas zwischen den Grundkörpern hindurch nach aussen entweichen kann. Auch hier ist mit "aussen" die Umgebung ausserhalb der Absperreinrichtung gemeint.

Vorzugsweise weist die Absperreinrichtung eine Anschlagsfläche auf, welche zum Anschlagen des Stellelements beim Verstellen in die Öffnungsstellung dient, um dadurch die Öffnungsstellung zu definieren. Indem das Stellelement also beim Verstellen in die Öffnungsstellung bis zum Anschlag an die Anschlagsfläche verschoben wird, kann auf einfache Weise sichergestellt werden, dass das Stellelement in der korrekten Stellung für die Freigabe der Kanäle positioniert ist. Insbesondere falls das Stellelement Verbindungskanäle aufweist, welche in der Öffnungsstellung zum Verbinden von jeweils zwei gegenüberliegen angeordneten Kanalteilen der Grundkörper dienen, kann mit Hilfe der Anschlagsfläche auf einfache Weise, aber doch wirksam sichergestellt werden, dass die Öffnungsstellung vom Stellelement korrekt eingenommen wird und die Kanäle und Kanalteile möglichst exakt ineinander münden und übergehen.

Vorteilhaft weist die Absperreinrichtung ausserdem einen Antrieb auf, welcher zum Verstellen des Stellelements von der Öffnungsstellung in die Schliessstellung und umgekehrt dient. Beim Antrieb kann es sich insbesondere um einen elektrischen oder einen hydraulischen Antrieb handeln. Der Antrieb kann ein Rotationsantrieb oder ein Linearantrieb sein. In einer insbesondere bevorzugten Ausführungsform handelt es sich beim Antrieb um einen pneumatischen Antrieb, also einem Antrieb, der auf Druckluft oder auf einem anderen Gas, wie insbesondere Stickstoff, als Arbeitsmedium basiert. Vorzugsweise weist die Absperreinrichtung hierzu einen am Stellelement angebrachten Antriebskolben auf, welcher mittels Gasdruck in zwei entgegengesetzte Richtungen bewegbar ist. Die Absperreinrichtung weist bevorzugt eine Kolbenkammer auf, in welcher der Antriebskolben verschiebbar angeordnet ist.

Die vorliegende Erfindung bezieht sich zudem auf die Verwendung der Absperreinrichtung, wie sie oben beschrieben wurde, als Stoppelement für Kugeln eines Kugelmesssystems, welches zur Messung der Neutronenflussverteilung in einem Kernreaktor dient. Die Absperreinrichtung kann dann auch als Kugelstopper bezeichnet werden. Vorteilhaft dient die Absperreinrichtung dabei zum Stoppen der Kugeln in der Parkposition. Die Absperreinrichtung kann insbesondere auch zwischen der Parkposition und einer Messstelle, insbesondere einem Messtisch, angeordnet sein, um die Kugeln in der Parkposition zu stoppen und bei Bedarf zur Messstelle durchzulassen.

Ausserdem bezieht sich die vorliegende Erfindung auf die Verwendung der Absperreinrichtung, wie sie oben beschrieben wurde, als Stoppelement für Targets eines Nuklidaktivierungssystems, welches zur Bestrahlung der Targets in einem Kernreaktor dient. Die Absperreinrichtung kann dann auch als Targetstopper oder im Falle, dass die Targets als Kugeln ausgebildet sind, als Kugelstopper bezeichnet werden. Vorteilhaft dient die Absperreinrichtung dabei zum Stoppen der Targets in der Parkposition. Die Absperreinrichtung kann insbesondere auch zwischen der Parkposition und einer Entnahmestelle, wo die ausreichend bestrahlten Targets dem Nuklidaktivierungssystem entnommen werden können, angeordnet sein, um die Targets in der Parkposition zu stoppen und bei Bedarf zur Entnahmestelle durchzulassen. Zwischen der Absperreinrichtung und der Entnahmestelle kann ein Anschlusskasten angeordnet sein, welcher bevorzugt, je nachdem welche Leitungen angeschlossen sind, zum Weiterleiten der Targets zur Entnahmestelle oder zum Einleiten bzw. Auslassen von Treibfluid in das / aus dem Nuklidaktivierungssystem dient.

Es sind aber auch anderweitige Verwendungen der Absperreinrichtung denkbar. So kann die Absperreinrichtung in anderen Ausführungsformen und bei entsprechender Auslegung zum Beispiel auch als Notschliesseinrichtung verwendet werden. Die Notschliesseinrichtung kann zum Beispiel dazu dienen, bei Auftreten eines Lecks in einem Instrumentationsfinger einen reaktornahen Leitungssystemabschnitt von einem reaktorfernen Leitungssystemabschnitt zu trennen.

Bevorzugt ist die Absperreinrichtung innerhalb einer Abschirmung angeordnet, welche die von den bestrahlten Festkörpern ausgehende Strahlung nach aussen hin abschirmt.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: ein Funktionsschema eines kombinierten Kugelmesssystems und eines Nuklidaktivierungssystems in einem Kernkraftwerk;
- Fig. 2: eine perspektivische Ansicht einer Absperreinrichtung nach einer erfindungsgemässen Ausführungsform;
- Fig. 3: eine andere perspektivische Ansicht der Absperreinrichtung der Figur 2;
- Fig. 4: eine zentrale Schnittansicht der Absperreinrichtung der Figur 2, mit dem Kolben in der Öffnungsstellung;
- Fig. 5: eine Schnittansicht in der Ebene V-V (siehe Fig. 4) der Absperreinrichtung der Figur 2;
- Fig. 6: eine Schnittansicht in der Ebene VI-VI (siehe Fig. 4) der Absperreinrichtung der Figur 2;
- Fig. 7: eine nur teilweise dargestellte Schnittansicht in der Ebene VII-VII (siehe Fig. 4) der Absperreinrichtung der Figur 2;
- Fig. 8: eine Schnittansicht in der Ebene VIII-VIII (siehe Fig. 5) der Absperreinrichtung der Figur 2;
- Fig. 9: eine Detailansicht des in der Fig. 4 markierten Bereichs IX;
- Fig. 10: eine zentrale Schnittansicht der Absperreinrichtung der Figur 2, mit dem Kolben in der Schliessstellung;
- Fig. 11: eine zentrale Schnittansicht einer Absperreinrichtung nach einer anderen erfindungsgemässen Ausführungsform, mit dem Kolben in der Öffnungsstellung;
- Fig. 12: eine zentrale Schnittansicht der Absperreinrichtung der Figur 11, mit dem Kolben in der Schliessstellung;
- Fig. 13: eine zentrale Schnittansicht in der Ebene VIII-VIII (siehe Fig. 11) der Absperreinrichtung der Figur 11;
- Fig. 14: eine zentrale Schnittansicht einer Absperreinrichtung der Figur 11, mit Handgriff für manuellen Betrieb; sowie
- Fig. 15: ein weiteres Funktionsschema eines kombinierten Kugelmesssystems und eines Nuklidaktivierungssystems in einem Kernkraftwerk, mit zweifacher Verwendung der Absperreinrichtung der Figur 11.

### BESCHREIBUNG BEVORZUGTER AUSFÜHRUNGSFORMEN

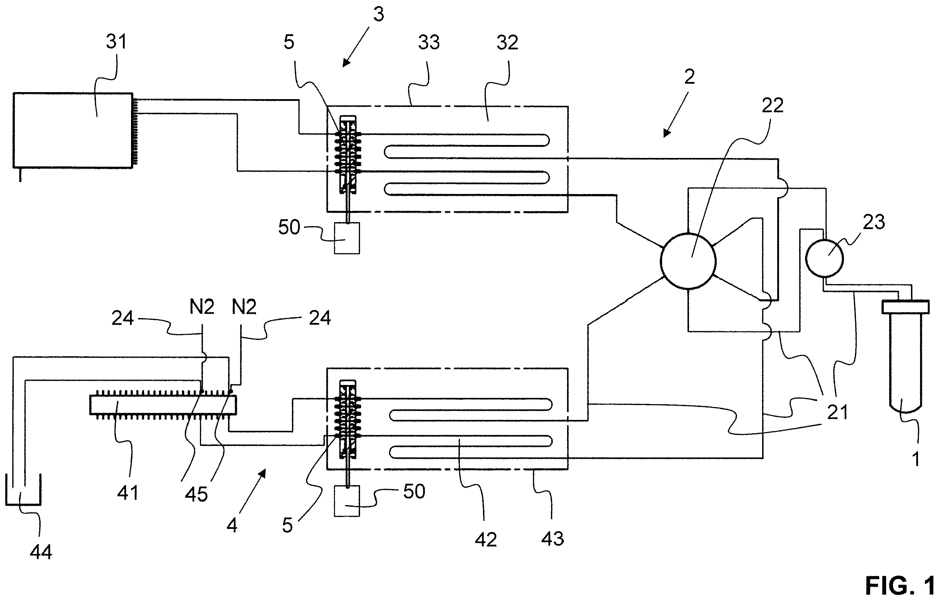

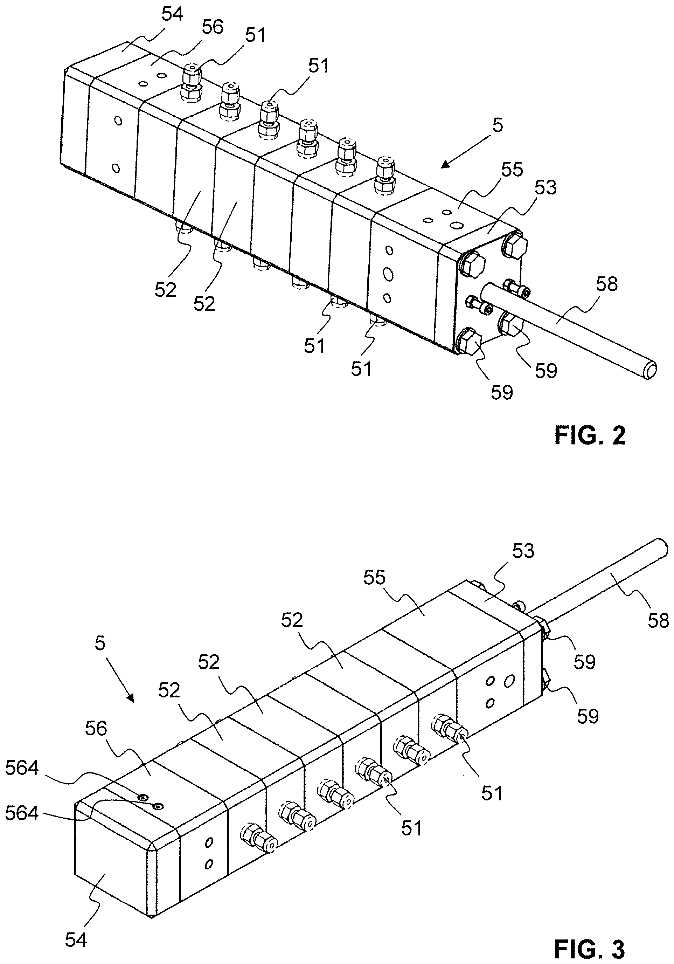

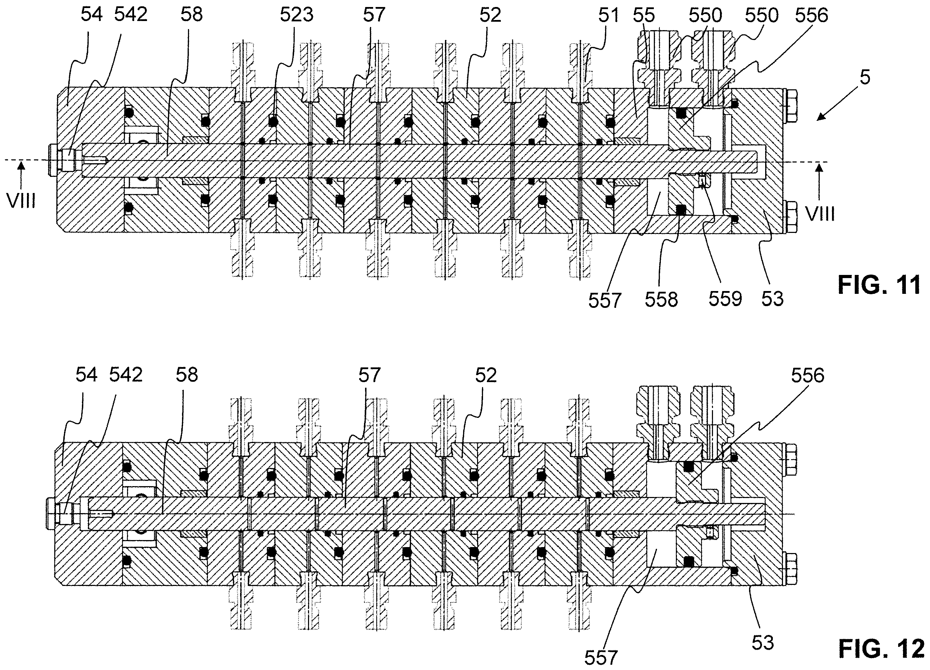

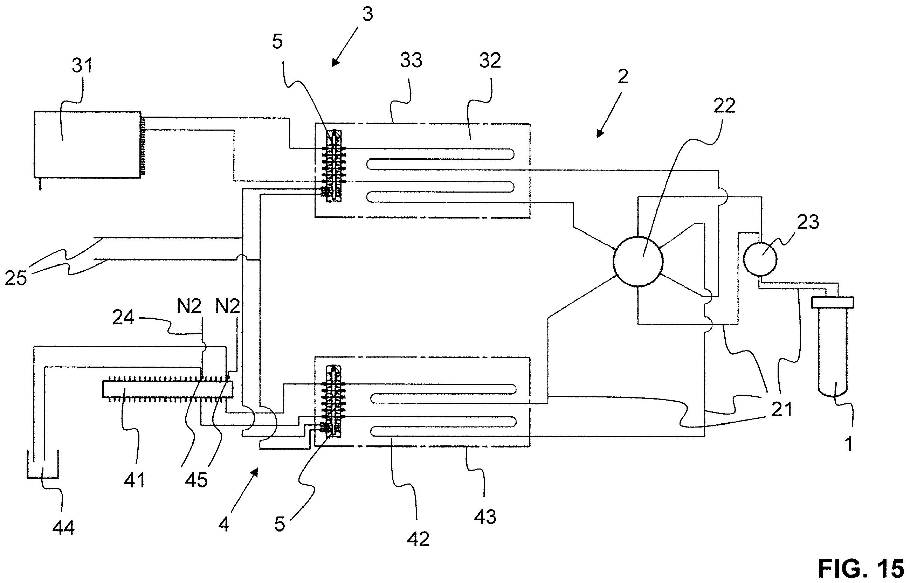

Die Figur 1 zeigt ein Funktionsschema eines mit einem Kugelmesssystem 3 kombinierten Nuklidaktivierungssystem 4, wie es zum Beispiel in einem Kernkraftwerk mit einem Kernreaktor 1 zur Verwendung kommt. Dabei kommen in einem dazugehörigen Leitungssystem 2 zwei erfindungsgemässe Absperreinrichtungen 5 zum Einsatz. Ein Beispiel einer Ausführungsform einer derartigen erfindungsgemässen Absperreinrichtung ist in den Figuren 2 bis 10 näher gezeigt. In den Figuren 11 bis 14 ist ein weiteres Beispiel einer Ausführungsform einer erfindungsgemässen Absperreinrichtung gezeigt. Die Figur 15 zeigt ein gegenüber der Figur 1 erweitertes Funktionsschema, welches insbesondere geeignet ist für den zweifachen Einsatz einer Absperreinrichtung gemäss dieses weiteren Beispiels. Funktional identische oder ähnliche Merkmale von unterschiedlichen Ausführungsformen sind in den Zeichnungen jeweils mit denselben Bezugszeichen versehen.

Das Leitungssystem 2 weist eine Vielzahl von Leitungen 21 auf, welche je nachdem einen Teil des Kugelmesssystems 3 oder des Nuklidaktivierungssystems 4 darstellen oder zu beiden System gehören. Es dient dazu, Messkugeln bzw. Nuklidaktivierungs-Targets in einen oder üblicherweise mehrere Instrumentationsfinger des Kernreaktors 1 einzubringen und nach ausreichender Verweildauer wieder aus diesen hinaus zu transportieren. Für den Transport der Messkugeln bzw. Targets dient ein Treibfluid, bevorzugt ein Treibgas, das heisst die Kugeln bzw. Targets werden mittels Über- und Unterdruck durch das Leitungssystem 2 transportiert. Als Treibgas wird die Verwendung von Stickstoff (N₂) bevorzugt.

Alle Komponenten des Leitungssystems 2 und insbesondere die Leitungen 21 sind bzgl. ihrer Innendurchmesser so bemessen, dass die Kugeln bzw. Targets mittels des Treibgases gut beförderbar sind, ohne gegenseitig die Positionen wechseln zu können. Die Leitungen 21 haben demnach einen Leitungsinnendurchmesser, der ungefähr dem Aussendurchmesser der Kugeln bzw. Targets entspricht. Allenfalls ist der Innendurchmesser der Leitungen 21 geringfügig, das heisst bevorzugt um maximal 10%, bevorzugter um maximal 5%, grösser, als der Aussendurchmesser der Kugeln und der Targets. Die Kugeln und die Targets weisen bevorzugt in etwa denselben Aussendurchmesser auf.

Das Kugelmesssystem 3 weist eine Parkposition 32 auf, welches zum Parken der Messkugeln vorgesehen ist, wenn keine Messung durchgeführt wird. Die Messkugeln werden dabei bevorzugt in mehreren parallelen Reihen nebeneinander angeordnet. Bevorzugt entspricht jede Reihe gerade einem Instrumentationsfinger im Kernreaktor 1, das heisst die Anordnung der Messkugeln in der Parkposition 32 entspricht der Anordnung der Messkugeln im Kernreaktor 1.

Bei ihrem Transport durch die Leitungen 21 des Leitungssystems 2 erhalten die Messkugeln aufgrund des Antriebs durch das Treibgas eine erhebliche kinetische Energie. Es wird deshalb auch von einem Kugelschussmesssystem gesprochen. Um die vom Kernreaktor 1 rückgeführten Kugeln bei Erreichen der Parkposition 32 zu stoppen, ist eine Absperreinrichtung 5 vorgesehen, die auch als Kugelstopper bezeichnet werden kann.

Da die Messkugeln bei Erreichen der Parkposition 32 üblicherweise noch radioaktiv sind, ist eine Abschirmung 33 vorgesehen, welche die Parkposition 32 und die Absperreinrichtung 5 vollständig umgibt, um die Umgebung vor radioaktiver Strahlung zu schützen.

Bei den Messkugeln handelt es sich bevorzugt um vanadiumhaltige Stahlkugeln. Zur Messung der Aktivität der im Kernreaktor 1 bestrahlten Kugeln ist ein Messtisch 31 mit mehreren Strahlungsdetektoren vorgesehen. Auf dem Messtisch 31 sind die Messkugeln analog wie in der Parkposition 32 bevorzugt in mehreren parallelen Reihen nebeneinander angeordnet, wobei bevorzugt jede Reihe gerade einem Instrumentationsfinger im Kernreaktor 1 entspricht. Dadurch kann auf einfache Weise von der gemessenen Strahlung jeder Messkugel auf den Neutronenfluss an einer entsprechenden Stelle im Kernreaktor 1 geschlossen werden.

Um die Messkugeln von der Parkposition 32 zum Messtisch 31 bzw. in die umgekehrte Richtung zu befördern, sind entsprechende Verbindungsleitungen 21 vorgesehen. Die Absperreinheit weist ein nachfolgend noch näher erläutertes Stellelement auf, mit welchem die Durchgänge von der Parkposition 32 zu den Verbindungsleitungen 21 und somit zum Messtisch 31 für die Kugeln freigegeben bzw. versperrt werden können.

Analog zum Kugelmesssystem 3 weist auch das Nuklidaktivierungssystem 4 eine Parkposition 42 auf, welches zum Parken der Nuklidaktivierungstargets vorgesehen ist. Die Targets werden dabei bevorzugt in mehreren parallelen Reihen nebeneinander angeordnet. Bevorzugt entspricht auch hier jede Reihe gerade einem Instrumentationsfinger im Kernreaktor 1, das heisst die Anordnung der Targets in der Parkposition 32 entspricht der Anordnung der Messkugeln im Kernreaktor 1. Die Parkposition wird von den Targets insbesondere jeweils dann eingenommen, wenn mittels des Kugelschusssystems 2 eine Messung durchgeführt werden muss.

Da der Neutronenfluss in den Bereich der Enden der Instrumentationsfinger üblicherweise geringer ist, können für diese Stellen Dummy-Targets eingesetzt werden, welche lediglich zur korrekten Anordnung der Targets im Kernreaktor 1 dienen, aber für den nachfolgenden z.B. medizinischen Einsatz nicht vorgesehen sind.

Um die vom Kernreaktor 1 rückgeführten Targets bei Erreichen der Parkposition 42 zu stoppen, ist auch hier eine Absperreinrichtung 5 vorgesehen.

Da die Targets bei Erreichen der Parkposition 42 üblicherweise stark radioaktiv sind, ist eine Abschirmung 43 vorgesehen, welche die Parkposition 42 und die Absperreinrichtung 5 vollständig umgibt, um die Umgebung vor radioaktiver Strahlung zu schützen.

Um die Targets nach ausreichender Bestrahlung dem Nuklidaktivierungssystem 4 entnehmen zu können, ist die Parkposition 42 via entsprechende Verbindungsleitungen 21 und einen Anschlusskasten 41 mit Entnahmeleitungen verbindbar, die in einen Entnahmebehälter 44 münden. Um die Targets dem Nuklidaktivierungssystem 4 zu entnehmen, wird das Stellelement der Absperreinrichtung 5 in die Öffnungsstellung verschoben, so dass der Durchgang in der Absperreinrichtung 5 freigegeben ist und die Targets zum Entnahmebehälter 44 transportiert werden können.

Der Anschlusskasten 41 dient zum Einleiten von Stickstoff, also dem Treibgas, in das Nuklidaktivierungssystem 4 via entsprechende N₂-Leitungen 24. Wenn die Targets dem Nuklidaktivierungssystem 4 entnommen werden sollten, werden die N₂-Leitungen 24 z.B. von Hand vom Anschlusskasten 41 abgekoppelt und stattdessen die Entnahmeleitungen angekoppelt. Hierzu sind vorteilhaft entsprechende Schnellkupplungen 45 vorgesehen. Der Transport der Targets von der Parkposition 42 in den Entnahmebehälter 44 kann zum Beispiel unter Ausnutzung der Gravitationskraft erfolgen.

Die Verteilung der Messkugeln und der Nuklidaktivierungstargets von den Parkpositionen 32 bzw. 42 in die verschiedenen Instrumentationsfinger des Kernreaktors 1 erfolgt mittels einer oder mehreren Verteilerweichen 22. Mittels der Verteilerweichen 22 werden die zu den Parkpositionen 32 bzw. 42 führenden Leitungen 21 mit den Leitungen 21 verbunden, welche zu den jeweiligen Instrumentationsfingern führen. Die Verteilerweiche(n) 22 können zum Beispiel gemäss den Angaben in der DE 10 2017 125 606 A1 ausgestaltet sein.

In der unmittelbaren Nähe des Reaktorkerns 1 ist ausserdem eine Notschliesseinrichtung 23 im Leitungssystem 2 vorgesehen. Die Notschliesseinrichtung 23 dient dazu, zum Beispiel bei Auftreten eines Lecks in einem der Instrumentationsfinger den reaktornahen Leitungssystemabschnitt vom reaktorfernen Leitungssystemabschnitt zu trennen. Die Notschliesseinrichtung kann als ein Rotationsventil, insbesondere als ein Kugelhahnventil, ausgebildet sein. Grundsätzlich ist es aber auch denkbar, eine erfindungsgemässe Absperreinrichtung als Notschliesseinrichtung 23 zu verwenden.

Eine bevorzugte Ausführungsform der im Kugelmesssystem 3 und im Nuklidaktivierungssystem 4 verwendeten Absperreinrichtung 5 wird nachfolgend anhand der Figuren 2 bis 10 näher erläutert.

Wie zum Beispiel anhand der Figuren 2 bis 4 gut zu erkennen ist, weist die Absperreinrichtung 5 mehrere, hier genau sechs, Grundkörper 52 auf, welche hintereinander angeordnet sind. Die Grundkörper 52 sind alle identisch ausgestaltet und jeweils als Ganzes quaderförmig.

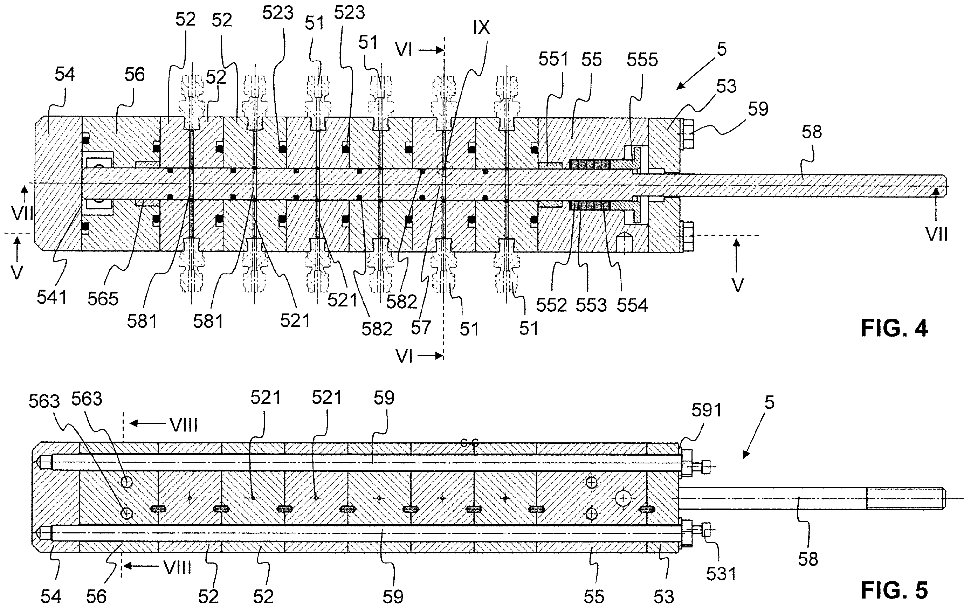

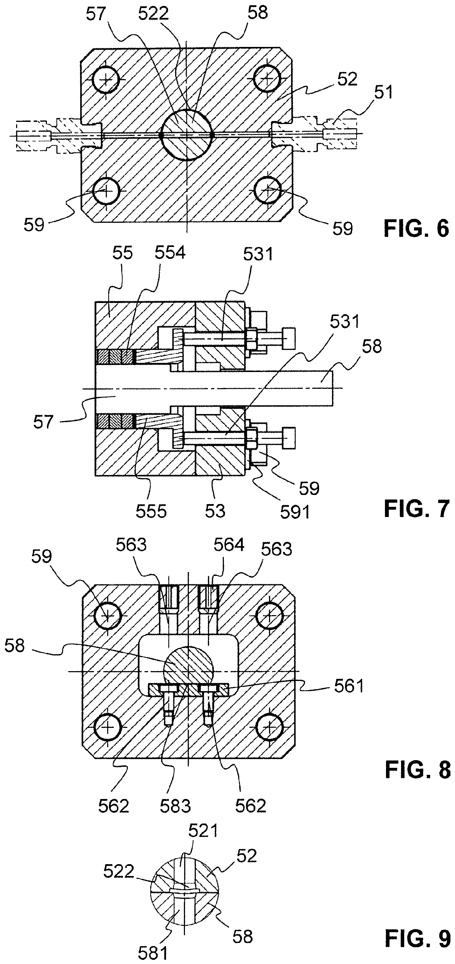

Wie den Figuren 4 und 6 entnehmbar ist, erstreckt sich durch jeden der Grundkörper 52 ein durchgehender Kanal 521, welcher zum Durchleiten der Messkugeln bzw. Targets dient. Die Kanäle 521 der verschiedenen Grundkörper 52 erstrecken sich alle parallel zueinander. Der Innendurchmesser der Kanäle 521 entspricht bevorzugt demjenigen der Leitungen 21, ist also ungefähr gleich gross oder allenfalls geringfügig grösser als der Aussendurchmesser der Messkugeln bzw. Targets. Auf beiden Seiten der Grundkörper 52 ist jeweils ein Leitungsanschluss 51 vorgesehen, welcher zur Verbindung des Kanals 521 mit einer Leitung 21 dient.

An den Enden der Reihe der Grundkörper 52 ist jeweils ein Führungsblock 55, 56 und danach ein Deckel 53, 54 angeordnet. Der vordere Deckel 53 und der hintere Deckel 54 sind mittels Verbindungsschrauben 59 gegen die Führungsblöcke 55, 56 und somit die Grundkörper 52 gespannt. Die Reihe der Grundkörper 52 ist somit sandwichartig zwischen den Führungsblöcken 55, 56 einerseits und den Deckeln 53, 54 eingespannt. Wie in der Figur 5 erkennbar ist, erstrecken sich die Verbindungsschrauben 59, von denen im vorliegenden Ausführungsbeispiel deren vier vorgesehen sind, durch den vorderen Deckel 53, die Führungsblöcke 55, 56 und die Grundkörper 52 hindurch und sind mittels gegenseitigem Gewindeeingriff im hinteren Deckel 54 verschraubt. Die Schraubköpfe der Verbindungsschrauben 59 liegen am vorderen Deckel 53 an. Zwischen den Schraubköpfen und dem Deckel 53 ist jeweils eine Unterlagscheibe 591 angeordnet.

Durch den vorderen Deckel 53, die Führungsblöcke 55, 56 und sämtliche Grundkörper 52 hindurch erstreckt sich eine Durchgangsöffnung 57, welche sich jeweils senkrecht mit den Kanälen 521 der Grundkörper 52 schneidet. In die Durchgangsöffnung 57 eingeschoben ist eine Kolbenstange 58, welche ein Stellelement der Absperreinrichtung 5 bildet und zum Freigeben bzw. Absperren der Kanäle 521 der Grundkörper 52 dient.

In der Ansicht der Figur 4 ist die Kolbenstange 58 vollständig in die Durchgangsöffnung 57 eingeschoben, das heisst bis zum Anschlag an einer Anschlagfläche 541 des hinteren Deckels 54. Die Kolbenstange 58 befindet sich in dieser Position in ihrer Öffnungsstellung, welche somit durch den Anschlag an der Anschlagfläche 541 definiert ist, und durchragt sämtliche Grundkörper 52 wie auch die Führungsblöcke 55, 56 und den vorderen Deckel 53 vollständig. Die Kolbenstange 58 weist im Inneren der Grundkörper 52, und der Führungsblöcke 55, 56 einen Aussendurchmesser auf, der ungefähr dem Innendurchmesser der Durchgangsöffnung 57 entspricht oder allenfalls geringfügig kleiner ist.

Abgesehen von der hervorragenden Kolbenstange 58 weist die Absperreinrichtung 5 als Ganzes eine kompakte quaderförmige Form auf. Sie ist dadurch platzsparend ausgebildet und montierbar.

Die Kolbenstange 58 weist mehrere, hier genau sechs, Kanäle 581 auf, welche sich jeweils senkrecht zur Längserstreckung der Kolbenstange 58 vollständig durch diese hindurch erstrecken. In der in der Figur 4 gezeigten Öffnungsstellung sind die Kanäle 581 gerade so angeordnet, dass sie jeweils eine Fortsetzung der Kanäle 521 der Grundkörper 52 durch die Kolbenstange 58 hindurch darstellen. Der Durchgang für die Messkugeln bzw. Targets durch die Kanäle 521 hindurch ist somit via die Kanäle 581 freigegeben.

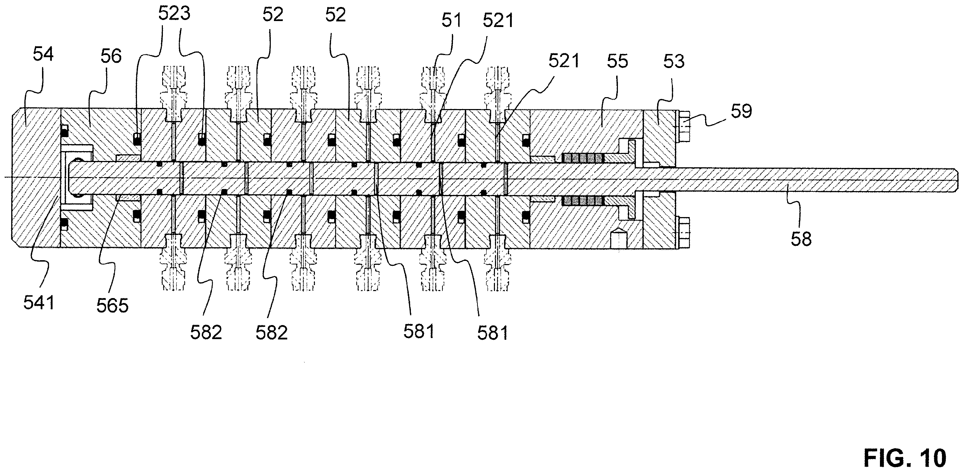

Um die Kolbenstange 58 von der Öffnungsstellung in die Schliessstellung zu bringen, wird sie mittels eines Antriebs 50 (siehe Figur 1) ein Stück weit von der Anschlagfläche 541 zurückgezogen. Die Schliessstellung der Kolbenstange ist in der Figur 10 gezeigt. Beim Antrieb 50 kann es sich z.B. um einen elektrischen Rotations- oder Linearantrieb oder um einen hydraulischen Antrieb handeln. Der Antrieb 50 ist an demjenigen freien Ende mit der Kolbenstange 58 verbunden, welches aus dem vorderen Deckel 53 nach aussen hin herausragt (in den Ansichten der Figuren 4 und 10 jeweils auf der rechten Seite).

Wie in der Figur 10 gut erkennbar ist, sind die Kanäle 581 der Kolbenstange 58 in der Schliessstellung gegenüber den Kanälen 521 der Grundkörper 52 verschoben angeordnet. Der Durchgang für die Messkugeln und die Targets durch die Kanäle 521 der Grundkörper 52 hindurch ist dadurch durch die Kolbenstange 58 versperrt. Wie eine Zusammenschau der Figuren 4 und 10 ergibt, reicht eine sehr geringe Verschiebung aus, um die Kolbenstange 58 von der Öffnungsstellung in die Schliessstellung bzw. umgekehrt zu bringen. Die Anforderungen an den Antrieb 50 sind dadurch verhältnismässig gering, so dass auch dessen Dimensionierung kleiner ausfallen kann.

Beim Verschieben ist die Kolbenstange 58 in Führungsbuchsen 551 und 565 der Führungsblöcke 55 bzw. 56 geführt. Wie in der Figur 8 erkennbar ist, weist die Kolbenstange 58 im Bereich des hinteren Führungsblocks 56 bevorzugt eine seitliche Abflachung 583 auf und liegt mit dieser an einer Anlageplatte 561 an. Die Kolbenstange 58 ist dadurch verdrehgesichert. Die Anlageplatte 561 ist in einem Hohlraum des Führungsblocks 56 mittels Schrauben 562 am Führungsblock 56 befestigt. Der Zugang zu den Schrauben 562 erfolgt via Öffnungen 563, welche auf der gegenüberliegenden Seite des Hohlraums vorgesehen und mittels Verschlusspfropfen 564 verschliessbar sind.

In der Schliessstellung der Kolbenstange 58 sind die Kanäle 521 der Grundkörper 52 bei der vorliegenden Ausführungsform wie erwähnt für die Messkugeln und die Targets verschlossen. Nicht verschlossen sind die Kanäle 521 weder in der Öffnungsstellung noch in der Schliessstellung jedoch für das Treibgas. Um einen ungehinderten Durchlass des Treibgases auch in der Schliessstellung zu ermöglichen, weisen die Grundkörper 52 und/oder die Kolbenstange 58 in den Bereichen der zur Durchgangsöffnung 57 hin mündenden Kanäle 521 bzw. 581 jeweils eine Ringnut 522 auf. Die Ringnut 522, welche insbesondere in den Figuren 6 und 9 erkennbar ist, erstreckt sich ausgehend von den Kanalmündungen jeweils ringförmig um die Kolbenstange 58 herum und gewährleistet so einen ungehinderten Gasaustausch zwischen den beiden beidseits der Kolbenstange 58 angeordneten Kanalteilen der Kanäle 521 auch in der Schliessstellung.

Um ein Austreten von Treibgas zwischen den Grundkörpern 52 und der Kolbenstange 58 hindurch nach aussen zu verhindern, sind an der Kolbenstange 58 jeweils zwischen den Kanälen 581 Dichtringe 582 angebracht. Die Dichtringe 582 dichten die Kolbenstange 58 gegenüber den Grundkörpern 52 ab.

Weitere Dichtungen 523 sind vorgesehen, um die Grundkörper 52 gegeneinander und gegenüber den Führungsblöcken 55 und 56 abzudichten. Die Dichtungen 523 verhindern somit ein Austreten von Treibgas zwischen den Grundkörpern 52 und den Führungsblöcken 55, 56 nach aussen hin.

Ein weiterer Dichtring 552 ist im vorderen Führungsblock 55 an der Kolbenstange 58 angeordnet. Er dient dazu, den Durchgang zwischen dem Führungsblock 55 und der Kolbenstange 58 hindurch abzudichten. Der Dichtring 552 ist mittels einer Anpresshülse 555 in Längsrichtung der Kolbenstange 58 gegen den Führungsblock 55 pressbar (siehe Figur 7). Die Presskraft der Anpresshülse 555 und somit die Dichtwirkung des Dichtrings 552 können mit Hilfe von zwei Stellschrauben 531 eingestellt werden. Zwischen dem Dichtring 552 und der Anpresshülse 555 sind im vorliegenden Ausführungsbeispiel eine Gleitplatte 553 sowie ein Endring 554 angeordnet. Die Kolbenstange 58 erstreckt sich durch den Dichtring 552, die Gleitplatte 553, den Endring 554 und die Anpresshülse 555 hindurch.

In den Figuren 11 bis 14 ist ein weiteres Ausführungsbeispiel einer erfindungsgemässen Absperreinrichtung 5 gezeigt. Im Unterschied zum Ausführungsbeispiel der Figuren 2 bis 9 weist dasjenige der Figuren 11 bis 14 einen integrierten pneumatischen Antrieb mit einem Antriebskolben 556 auf, der mittels eines Gewindestiftes 559 oder anderweitig an der Kolbenstange 58 angebracht ist und innerhalb einer Kolbenkammer 557 bewegbar ist. Die Kolbenkammer 557 befindet sich im Inneren des Führungsblocks 55 und wird durch den Führungsblock 55 und den Deckel 53 begrenzt. Beidseits des Antriebskolbens 556 mündet ein Gasanschluss 550 in die Kolbenkammer 557, um je nach gewünschter Bewegungsrichtung der Kolbenstange 58 Gas unter Druck in die Kolbenkammer 557 einzuleiten. Das Gas dient somit als Arbeitsmedium, um die Kolbenstange 58 von der Öffnungsstellung in die Schliessstellung bzw. umgekehrt zu bewegen, wobei es sich beim Gas zum Beispiel um Druckluft, bevorzugt aber um Stickstoff, handeln kann. Mittels einer Kolbendichtung 558 ist der Antriebskolben 556 umlaufend gegenüber der Innenwand des Führungsblocks 55 abgedichtet.

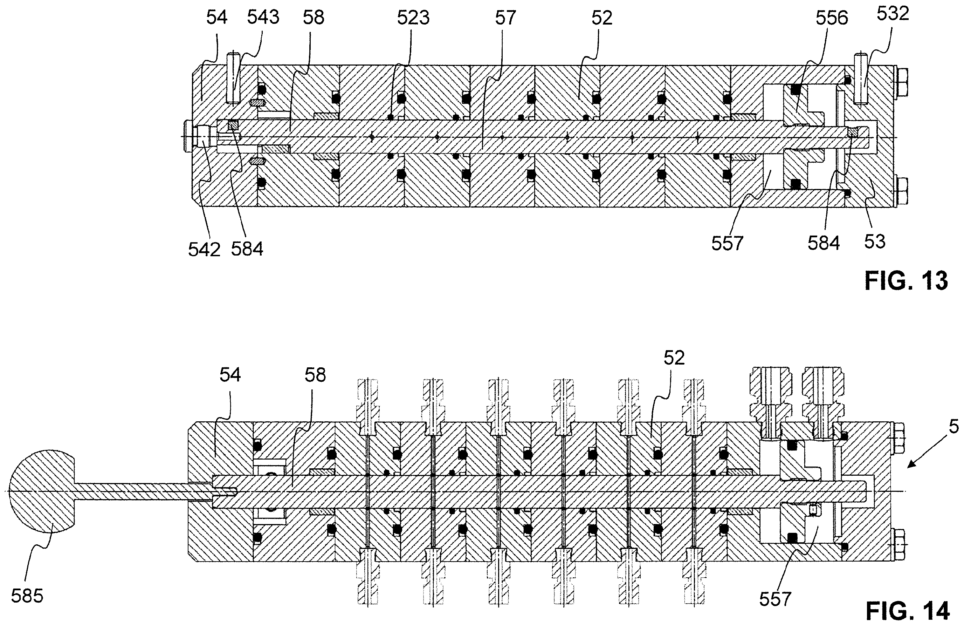

Bei dem in den Figuren 11 bis 14 gezeigten Ausführungsbeispiel sind zudem zwei Magnetsensoren 532, 543 vorgesehen, um die Position der Kolbenstange 58, also des Stellelements, gegenüber den Grundkörpern 52 zu messen. Ein erster Magnetsensor 532 ist, wie in der Figur 13 ersichtlich ist, in einer entsprechend dafür vorgesehenen Bohrung des Deckels 53, positioniert und ein zweiter Magnetsensor 543 in einer ebenfalls dafür vorgesehenen Bohrung des Deckels 54. Um die Messung zu ermöglichen, ist zudem im Bereich der Enden der Kolbenstange 58 jeweils ein Magnet 584, insbesondere ein Permanentmagnet, angebracht.

Im Gegensatz zum Ausführungsbeispiel der Figuren 2 bis 9 weist dasjenige der Figuren 11 bis 14 zudem eine zentral im Deckel 54 angeordnete Gewindebohrung auf, welche im Normalbetrieb mit einer Verschlussschraube 542 verschlossen ist. Im Falle einer Betriebsstörung des Antriebs der Absperreinrichtung 5, kann die Verschlussschraube 542 ausgeschraubt und ein Handgriff 585 in eine am entsprechenden Ende der Kolbenstange 58 vorgesehene Gewindebohrung eingeschraubt werden. Die Kolbenstange 58 kann dann im Notbetrieb behelfsmässig mit Hilfe des Handgriffs 585 manuell von der Öffnungsstellung in die Schliessstellung bzw. umgekehrt verstellt werden.

Ein Funktionsschema, welches sich insbesondere für das Ausführungsbeispiel der Absperreinrichtung 5 der Figuren 2 bis 9 eignet, ist in der Figur 15 gezeigt. Das Funktionsschema der Figur 15 unterscheidet sich dadurch von demjenigen der Figur 1, dass die beiden Absperreinrichtungen 5 jeweils einerseits derjenigen entsprechen, welche in den Figuren 11 bis 14 gezeigt ist, und dass andererseits Gasschaltleitungen 25 vorhanden sind, um die in den Absperreinrichtungen 5 integrierten pneumatischen Antriebe zu steuern. Dabei ist einer der beiden Gasanschlüsse 550 der ersten Absperreinrichtung 5 jeweils derart mittels einer Gasschaltleitung 25 mit einem der beiden Gasanschlüsse 550 der zweiten Absperreinrichtung 5 verbunden, dass eine Druckbeaufschlagung der entsprechenden Gasschaltleitung 25 zu einem Verschliessen der ersten Absperreinrichtung 5 und zu einem Öffnen der zweiten Absperreinrichtung 5 bzw. umgekehrt führt.

Selbstverständlich ist die hier beschriebene Erfindung nicht auf die erwähnten Ausführungsformen beschränkt und eine Vielzahl von Abwandlungen ist möglich. So muss das Stellelement, welches hier durch die Kolbenstange 58 gebildet wird, zum Beispiel nicht zwingend wie im Ausführungsbeispiel der Figuren 2 bis 10 einen kreisrunden Querschnitt aufweisen. Genauso gut könnte das Stellelement zum Beispiel einen rechteckigen, insbesondere quadratischen, Querschnitt haben. Die Kanäle 521 müssen sich zudem nicht unbedingt alle parallel zueinander erstrecken, sondern könnten sich auch in unterschiedliche Richtungen erstrecken. Die Kanäle 581 des Stellelements müssten dann entsprechend ausgerichtet sein. Anstatt mehrere könnte die Absperreinrichtung auch nur einen einzigen Grundkörper aufweisen, der einen oder gar mehrere Kanäle für die Messkugeln bzw. Targets hat. Auch eine Ausführungsform mit mehreren Grundkörpern, die jeweils mehrere Kanäle aufweisen, wäre denkbar. Eine Vielzahl weiterer Abwandlungen ist denkbar.

**BEZUGSZEICHENLISTE**

| | | | |
|---|---|---|---|
| 1 | Kernreaktor | 54 | Deckel |
| | | 541 | Anschlagfläche |
| 2 | Leitungssystem | 542 | Verschlussschraube |
| 21 | Leitung | 543 | Magnetsensor |
| 22 | Verteilerweiche | 55 | Führungsblock |
| 23 | Notschliesseinrichtung | 550 | Gasanschluss |
| 24 | N₂-Leitungen | 551 | Führungsbuchse |
| 25 | Gasschaltleitungen | 552 | Dichtring |
| | | 553 | Gleitplatte |
| 3 | Kugelmesssystem | 554 | Endring |
| 31 | Messtisch | 555 | Anpresshülse |
| 32 | Parkposition | 556 | Antriebskolben |
| 33 | Abschirmung | 557 | Kolbenkammer |
| | | 558 | Kolbendichtung |
| 4 | Nuklidaktivierungssystem | 559 | Gewindestift |
| 41 | Anschlusskasten | 56 | Führungsblock |
| 42 | Parkposition | 561 | Anlageplatte |
| 43 | Abschirmung | 562 | Schraube |
| 44 | Entnahmebehälter | 563 | Öffnung |
| 45 | Schnellkupplungen | 564 | Verschlusspfropfen |
| | | 565 | Führungsbuchse |
| 5 | Absperreinrichtung | 57 | Durchgangsöffnung |
| 50 | Antrieb | 58 | Kolbenstange |
| 51 | Leitungsanschluss | 581 | Kanal |
| 52 | Grundkörper | 582 | Dichtring |
| 521 | Kanal | 583 | Abflachung |
| 522 | Ringnut | 584 | Magnet |
| 523 | Dichtung | 585 | Handgriff |
| 53 | Deckel | 59 | Verbindungsschraube |
| 531 | Stellschraube | 591 | Unterlagscheibe |
| 532 | Magnetsensor | | |

## Patentansprüche

1. Absperreinrichtung (5) zum Stoppen von bestrahlten oder zu bestrahlenden Festkörpern in einem Leitungssystem (2), das zum Transportieren der Festkörper mittels eines Treibfluids in einen Kernreaktor (1) hinein und aus diesem hinaus dient und insbesondere ein Teil eines Kugelmesssystems (3) bilden kann, aufweisend
zumindest einen Grundkörper (52) mit einem durchgehenden Kanal (521) für die Festkörper, sowie
ein innerhalb des Grundkörpers (52) angeordnetes Stellelement (58), welches relativ zum Grundkörper (52) derart zwischen einer Öffnungsstellung und einer Schliessstellung verstellbar ist, dass der Kanal (521) für die Festkörper in der Öffnungsstellung durchgängig und in der Schliessstellung verschlossen ist,
**dadurch gekennzeichnet, dass**
das Stellelement (58) mittels Verschieben relativ zum zumindest einen Grundkörper (52) von der Öffnungsstellung in die Schliessstellung sowie von der Schliessstellung in die Öffnungsstellung bringbar ist.

2. Absperreinrichtung (5) nach Anspruch 1, aufweisend mehrere derartige Grundkörper (52) mit jeweils einem durchgehenden Kanal (521), wobei die Kanäle (521) von allen Grundkörpern (52) in der Öffnungsstellung des Stellelements (58) für die Festkörper durchgängig und in der Schliessstellung verschlossen sind.

3. Absperreinrichtung (5) nach Anspruch 2, wobei sich die Kanäle (521) von allen Grundkörpern (52) parallel zueinander erstrecken.

4. Absperreinrichtung (5) nach Anspruch 2 oder 3, wobei die mehreren Grundkörper (52) hintereinander angeordnet zwischen zwei Spannelementen (53, 54) eingespannt sind.

5. Absperreinrichtung (5) nach einem der Ansprüche 2 bis 4, wobei die mehreren Grundkörper (52) identisch ausgestaltet sind.

6. Absperreinrichtung nach einem der vorhergehenden Ansprüche, wobei der zumindest eine Grundkörper (52) eine sich mit dem Kanal (521) schneidende, insbesondere rechtwinklig schneidende Durchgangsöffnung (57) aufweist, und wobei sich das Stellelement (58) verschiebbar durch die Durchgangsöffnung (57) hindurch erstreckt.

7. Absperreinrichtung (5) nach einem der vorhergehenden Ansprüche, wobei der Grundkörper (52) und/oder das Stellelement (58) eine Nut, insbesondere eine Ringnut (522), aufweisen, um auch in der Schliessstellung einen Durchlass für das Treibfluid zu ermöglichen.

8. Absperreinrichtung (5) nach einem der vorhergehenden Ansprüche, wobei eine Abdichtung (582) vorgesehen ist, um den zumindest einen Grundkörper (52) derart gegenüber dem Stellelement (58) abzudichten, dass weder in der Öffnungsstellung noch in der Schliessstellung Gas zwischen dem Grundkörper (51) und dem Stellelement (58) hindurch aus dem Kanal (521) nach aussen entweichen kann.

9. Absperreinrichtung (5) nach einem der vorhergehenden Ansprüche, aufweisend mehrere Grundkörper (52), wobei zwischen benachbarten Grundkörpern (52) jeweils ein Dichtelement (523) angeordnet ist, um zu verhindern, dass weder in der Öffnungsstellung noch in der Schliessstellung Gas zwischen den Grundkörpern (52) hindurch nach aussen entweichen kann.

10. Absperreinrichtung (5) nach einem der vorhergehenden Ansprüche, aufweisend eine Anschlagsfläche (541), welche zum Anschlagen des Stellelements (58) beim Verstellen in die Öffnungsstellung dient, um dadurch die Öffnungsstellung zu definieren.

11. Absperreinrichtung (5) nach einem der vorhergehenden Ansprüche, ausserdem aufweisend einen Antrieb (50), insbesondere einen elektrischen oder hydraulischen Antrieb, welcher zum Verstellen des Stellelements (58) von der Öffnungsstellung in die Schliessstellung und umgekehrt dient.

12. Verwendung der Absperreinrichtung (5) nach einem der vorhergehenden Ansprüche als Stoppelement für Kugeln eines Kugelmesssystems (3), welches zur Messung der Neutronenflussverteilung in einem Kernreaktor (1) dient.

13. Verwendung der Absperreinrichtung (5) nach einem der vorhergehenden Ansprüche als Stoppelement für Targets eines Nuklidaktivierungssystems (4), welches zur Bestrahlung der Targets in einem Kernreaktor (1) dient.
